# EUROPEAN PATENT SPECIFICATION

(11) **EP 2 453 068 B1**
(45) Date of publication and mention of the grant of the patent: **29.06.2016**
(21) Application number: 10191091.7
(22) Date of filing: 12.11.2010
(51) Int. Cl.: E04B 2/96, E06B 3/263, F16B 7/04, E06B 3/964, E06B 3/972, F16B 7/18

(54) **Detachable connection of mullion and transom profiles**
Lösbare Verbindung von Pfosten- und Riegelprofilen
Connexion amovible de traverses et montants

(43) Date of publication of application: 16.05.2012
(73) Proprietor: Cuhadaroglu Metal Sanayi Ve Pazarlama Anonim Sirketi, Istanbul 34900 (TR)
(72) Inventor: Yilmaz, Metin, 34900 Istanbul (TR); Gokdemir, Huseyin, 34900 Istanbul (TR)
(74) Representative: Dericioglu Kurt, Ekin

(56) References cited:
- EP-A1- 0 524 849
- EP-A2- 0 238 848
- WO-A1-95/27834
- US-A- 3 969 031
- US-A- 4 572 694

## Description

### Field of the Invention

The present invention relates to door and window system comprising rigid and mechanical assembling which enable door or window transom and/or mullion profiles to be non-destructively disassembled, moved and fixed again at anytime during production, installation or usage time horizontally, vertically or angularly by means of special mechanical fixing parts.

### Background of the Invention

In the state of the art, before door or window profiles are turned into frame, fixing part are assembled to the frame profile by sliding, their positions are fixed and horizontal and/or vertical profiles are placed into the frame profile physically and then corner of the frame profile are assembled in a rigid and mechanical way and/or are pressed.

Disadvantages of this application are that: before frame profiles are pressed, horizontal or vertical profiles must be fixed to the sash profiles and positions thereof must be determined; and then after rigid and mechanical assembly of the sash profiles, position of transom/mullion profile cannot be changed or adjusted; desired changes cannot be made in construction site or usage step after production. Especially; the fact that it necessitates extra personnel requirement in plus-shaped assemblies and installations in a distance whereto the installation personnel cannot reach with his two hands, is regarded as a distinct disadvantage.

In another state of the art, U shaped fixing parts are placed onto or into the horizontal or vertical profiles of the window or door system. And then these profiles are placed directly to the inside of the frame profiles for vent or frame.

After that, horizontal or vertical profiles and the frame are fixed by screwing from the outer edge of the frame.

Disadvantages of this application are that: screw must be placed from the outer edges of the sash profile inwards for assembly process of horizontal or vertical profiles with frame profiles, this assembly is not possible in triple or quadruple (in plus-shaped) assemblies, it does not allow any change in construction site or usage step after production and it provides resistance against loads that may occur in assembly points due to external factors such as wind, gravity, etc. only up to the screw diameter used.

In a further state of the art, after horizontal or vertical profiles, door or window profiles are turned into frame, fixing parts with special geometric cross-section (protruding) are fixed into or onto horizontal or vertical transom profiles. Midpoint of frame-shaped vent or frame profiles are stretched up to protrusion of fixing part and then mullion or transom profile are assembled to the frame profile.

Disadvantages of this application are that: screw must be placed from the outer edge of the frame profile inwards for assembly process of horizontal or vertical profiles with frame profiles, plus-shaped assemblies are not possible, it does not allow any change in construction site or usage step after production and also damages that may arise from stretching the frame profiles and unstretchability problems in small sashes.

In another state of the art (EP 0 238 848 A2), cleat profile will be mounted by sliding before frame assembled by corner press or another technique. Mullion or transom profile can be repositioned after assembling of frame by means of press or another technique. The cleat cannot be assembled or disassembled after assembling of the frame.

In another state of the art (WO 95/27834 A1), cleat profile will be mounted by rotating into the protrusions of the frame profile, before assembling of the frame by corner press or another technique. Mullion or transom profile can be repositioned after assembling of frame by means of press or another technique. The cleat cannot be assembled or disassembled after assembling of the frame.

In another state of the art (EP 0 524 849 A1), cleat profile will be mounted by means of inserting the protrusions to the channel on the frame profile, before assembling of the frame profile by corner press or another technique. Mullion or transom profile can be repositioned after assembling of frame by means of press or another technique. The cleat cannot be assembled or disassembled after assembling of the frame.

### Objective of the Invention

The objective of the present invention is to assemble the horizontal, vertical or angular profiles of the window or door system to the frame-shaped frame or vent profile or each other, in which the transom or mullion profiles can be disassembled non-destructively or repositioned and fixed again in any time during the production, installation or usage of the window or door.

Another objective of the invention is to enable vertical or horizontal profiles, which are installed into frame-shaped frame or vent profiles or installed with each other in themselves, to be resistant to loads that may occur in assembly points due to external factors such as wind, gravity, etc. and to maintain the integrity of assembling.

A further objective of the invention is to be able to install horizontal or vertical profiles of the door or window systems into frame or vent after frame or vent profiles are turned into frame and/or without subjecting the frame profiles to temporary deformation.

A still further objective of the invention is to enable assembly in installation process of horizontal or vertical profiles of the door or window systems into frame-shaped frame or vent profiles or installation process thereof with each other without needing to screw the frame profiles from outer edge thereof.

A yet further objective of the invention is to be able to carry out installation of three or four door or window system into frame-shaped frame or vent profiles.

Said objectives are solved by a door, window or curtain wall assembly according to the present claim 1 and a method according to the present claim 2.

### Figures Illustrating the Invention

The present invention should be evaluated in conjunction with the figures which are described below, in order that it's configuration and advantages with the additional members are understood best.

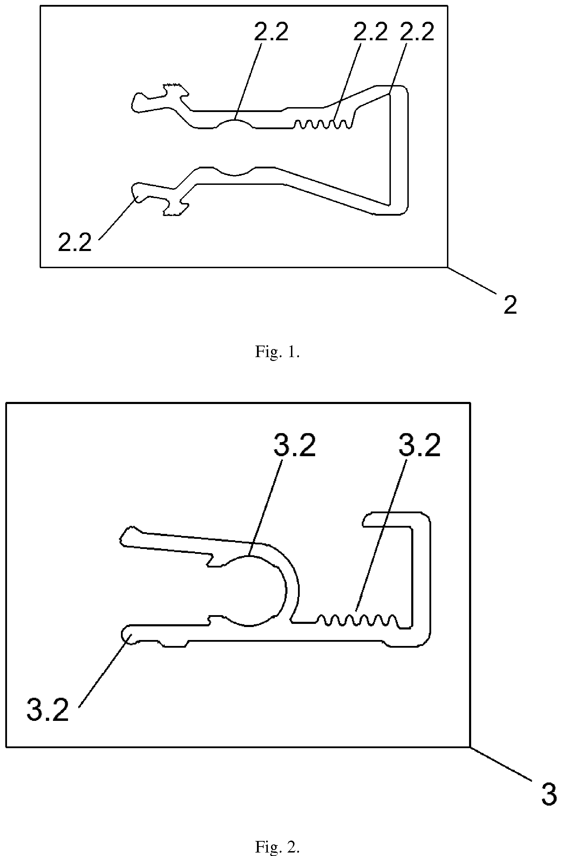

Figure 1. Inner cleat profile
Figure 2. Outer cleat profile

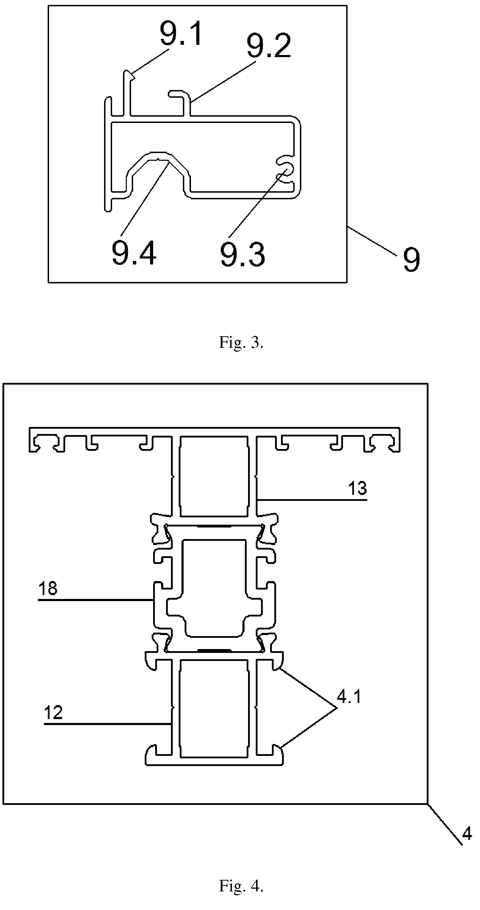

Figure 3. Frame, Transom/Mullion profile
Figure 4. Door cleat profile
Figure 5. Assembly detail of Frame - Transom/Mullion- Cleat
Figure 6. Pre-installation of frame, transom/mullion and cleat profiles
Figure 7. Assembly detail of cleat transom/mullion profile
Figure 8. Installation detail of transom/mullion - frame
Figure 9. Cleat installation tool
Figure 10. Moving the cleat in transom/mullion towards frame
Figure 11. Installation of fixing screws
Figure 12. Transom/Mullion and cleat profiles after installation
Figure 13. Installation of door center guide profile
Figure 14. Center guide profile after installation
Figure 15. Perspective and sectional view of assembly of inner and outer frame profile-thermal barrier
Figure 16. Perspective and sectional view of assembly of inner and outer transom/mullion profile-thermal barrier

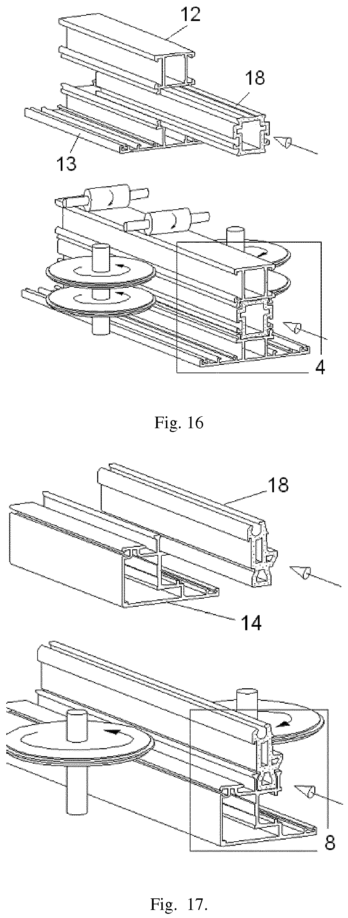

Figure 16. Perspective and sectional view of assembly of inner and outer window vent profile-thermal barrier
Figure 17. Perspective and sectional view of assembly of inner and outer door vent profile-thermal barrier

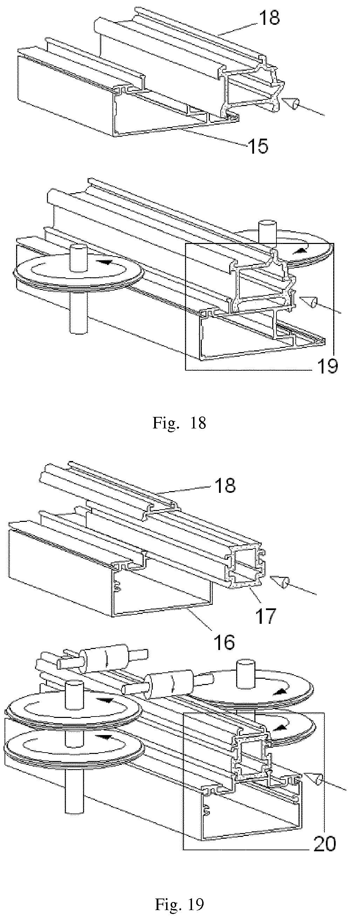

Figure 19. Perspective and sectional view of assembly of inner and outer center guide profile-thermal barrier

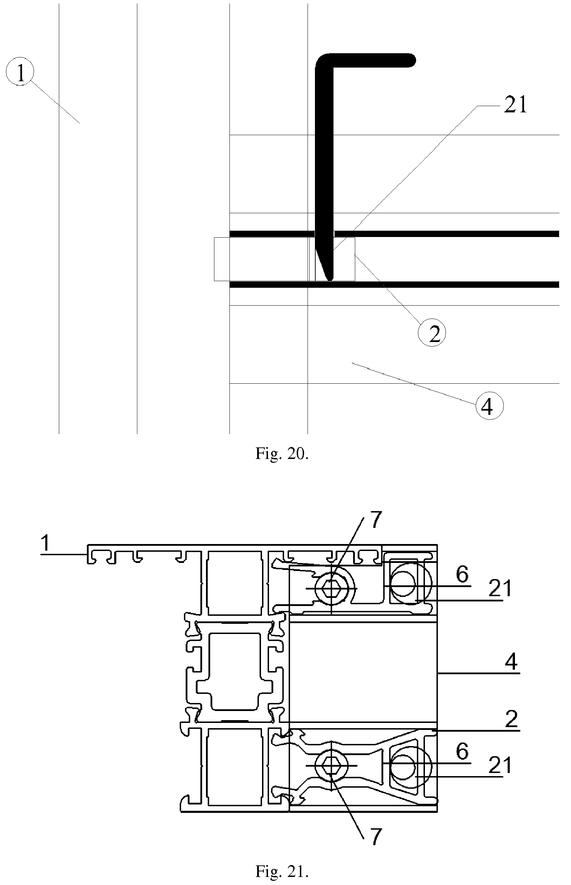

Figure 20. Detail of conical slot - pin assembly
Figure 21. Detail of eccentric pin - hole

### Part numbers

1. Heat-insulated frame profile
2. Inner cleat profile
   2.1. Fixing stands
   2.2. Cavity for installation screw
   2.3. Rack and pinion gear
   2.4. Stretching center
3. Outer cleat profile
   3.1. Fixing stands
   3.2. Cavity for installation screw
   3.3. Rack and pinion gear
4. Heat-insulated transom/mullion profile
   4.1. Fixing tabs
5. Cleat installation tool
6. Gear of the installation tool
7. Installation screw
8. Heat-insulated window vent profile
9. Door cleat profile
   9.1. Fixing stands
   9.2. Position determining stand
   9.3. Fixing screw hole
   9.4. Fixing screw groove
12. Inner Transom/Mullion Profile
13. Outer Transom/Mullion Profile
14. Inner Window Vent Profile
15. Inner Door Vent Profile
16. Inner Center Guide Profile
17. Outer Center Guide Profile
18. Heat insulation barrier
19. Door Vent Profile
20. Center Guide Profile for door vent
21. Eccentric Pin
22. Conical Pin

### Detailed Description of the Invention

In this detailed description, preferred embodiments of the inventive door and window fenestration system are described only for better understanding of the subject and in such a manner that it won't produce any limiting effect.

The inventive heat-insulated aluminum door, window and curtain wall system generally consists of: aluminum frame (1) with special geometric cross-section which are produced in extrusion presses in accordance with grooves of accessory and installation; vent (8) and transom/mullion (4) profiles; assembling parts (2,3,9) which enable transom/mullion profiles (4) to be assembled with frame profiles of frame (1) or vent (8) or with each other in rigid and mechanical way and which are produced from aluminum with special geometric cross-section or other metals.

Inner and outer frame profiles and inner (12) and outer (13) transom/ mullion profiles, inner vent profiles (14, 15) of the heat-insulated aluminum door, window or curtain wall system are produced in extrusion presses such that they have suitable grooves wherein accessories to be used (comer cleats, setting blocks, load transferring profiles, gaskets) will be installed.

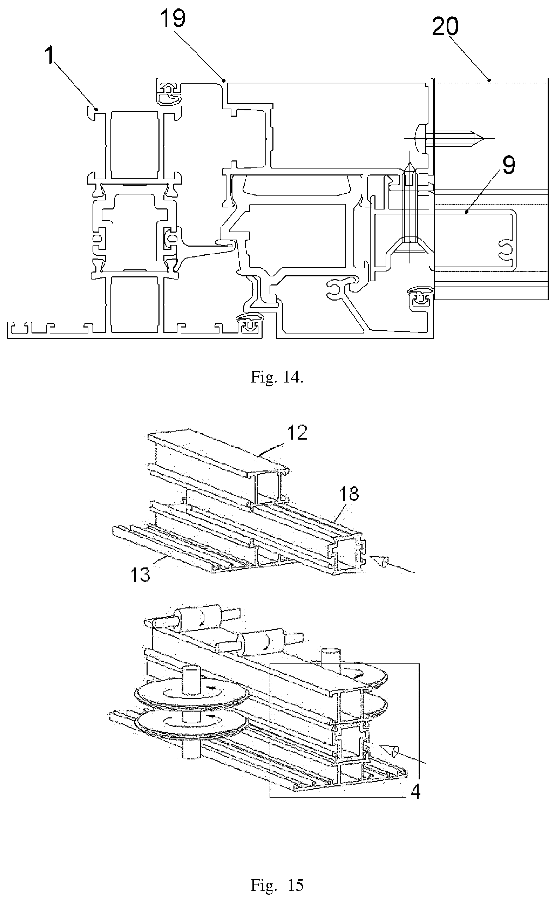

Frame (1), vent (8,19) and transom/mullion (4,20) profiles are produced by mechanically assembling the inner and the outer frame profiles and the inner (12) and the outer (13) transom/mullion profiles, the inner vent profiles (14, 15) with the thermal insulation barriers (18) produced from a polymeric material as shown on Figures 15, 16, 17, 18, 19.

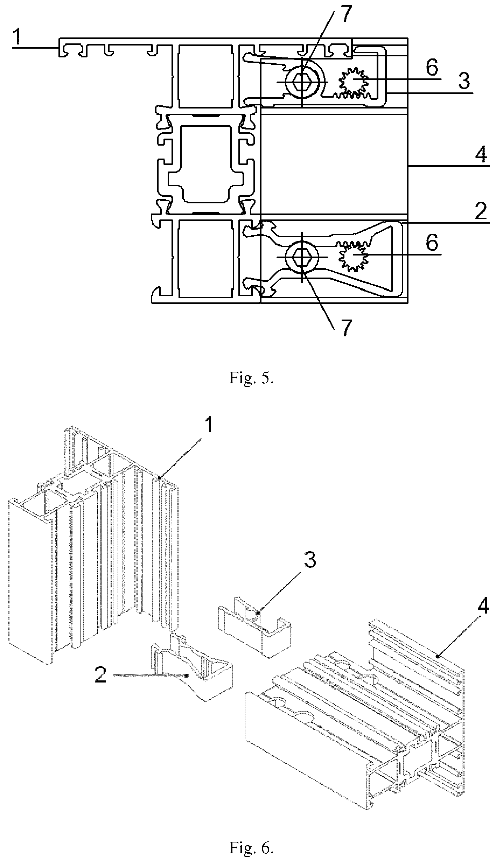

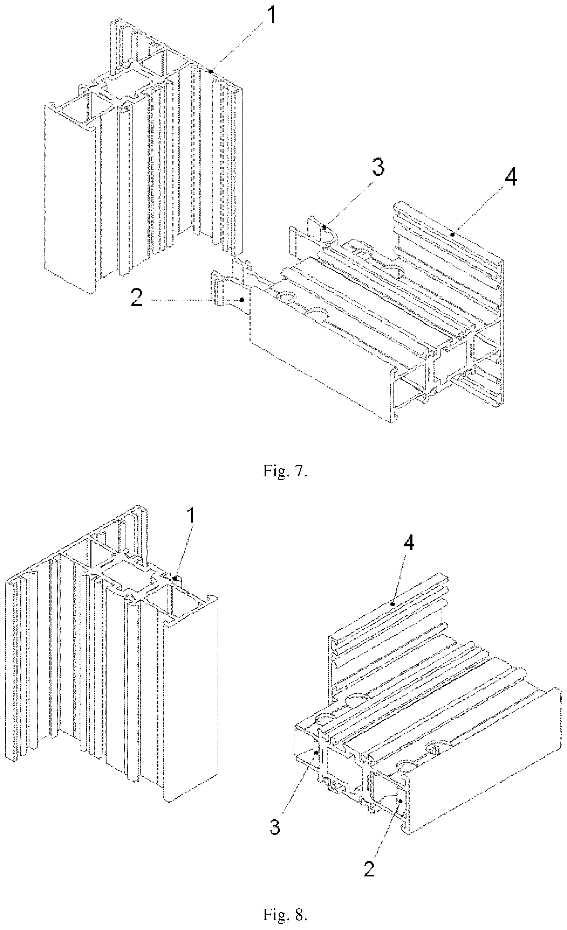

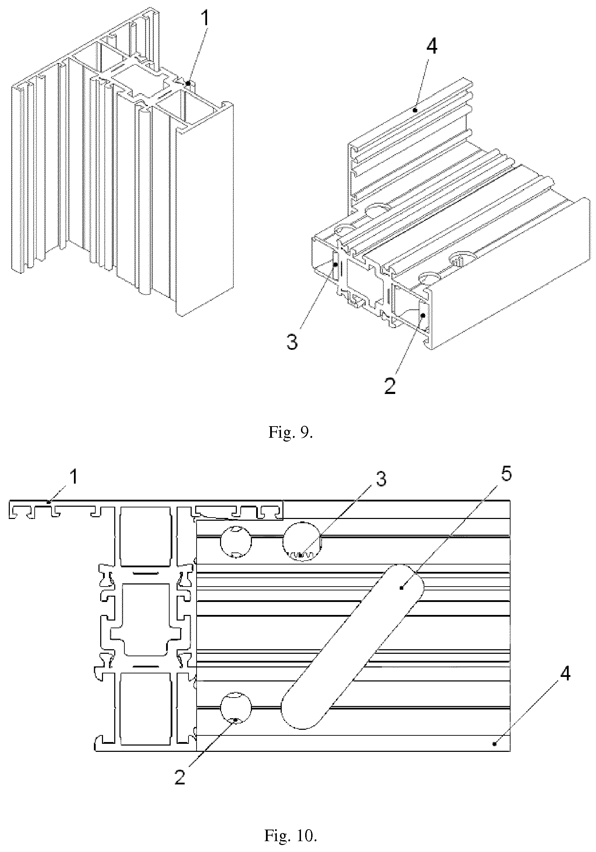

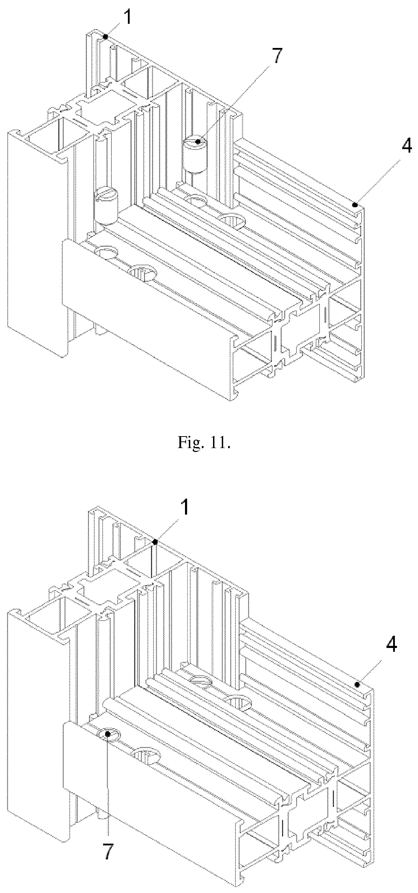

Profiles of inner cleat (2) and outer cleat (3) with special geometric cross-section are cut in an appropriate extent for inner cavities of horizontal, vertical or angular transom/mullion profiles (4). The transom/mullion profiles (4) are milled in accordance with the frame profile, which will be assembled and two holes for each cleat are drilled on the transom or mullion profiles for assembling of that cleats (Figure 6). By placing pieces which are cut from the profiles of inner cleat (2) and outer cleat (3) to the cavities in the transom/mullion profile (4), pieces cut from the transom/mullion profile (4) and the cleat profiles (2,3) are slid inwards until they are in same level (flush) (Figure 7, Figure 8). Same processes are repeated for the other end of the transom/mullion profile (4). Then, transom/mullion profile (4), which will be assembled, is brought into the frame-shaped frame (1) or the transom/mullion profile (4). Gear of the installation tool (6) is placed to the installation hole in the transom/mullion profile (4) thus to the rack and pinion gear section (3.3) of the cleat (2,3) profile (Figure 9, Figure 10). By turning the cleat installation tool (5), the cleat profile (2,3) is enabled to be moved linearly by means of gear of the installation tool (6). During said movement, when the stands of the cleat profiles (2,3) reach the frame or the transom/mullion profile tabs (4.1), the cleat profile (2,3) is enabled to engage into the frame profile (1,4) by stretching from the stretching center (Figure 5). Then, the cleat installation tool (5) is displaced by being pulled. Finally, by turning and driving the installation screw (7) into other two holes drilled on the transom/mullion profile, the cleats (2,3) and thus the transom/mullion profiles (4) are enabled to fix to the frame (1) profile tightly (Figure 11, Figure 12).

By means of the assembly between the installation screw (7) and the cleats (2,3), horizontal, vertical or angular position of the transom/mullion profiles (4) in the frame can be changed by loosening and then turning the installation screw (7) at anytime. During said process, the fact that the cleats (2,3) are tightened between the frame profile tabs (4.1) enables that both materials are not subjected to permanent deformation and there is no need the hole on the frame profile for fixing parts such as screw etc. (4.1).

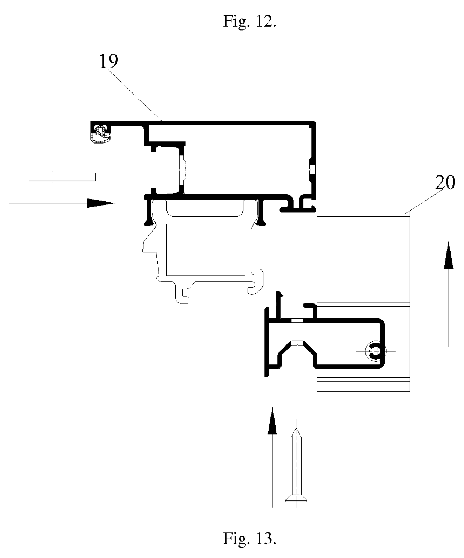

An additional method of application for center guide of the door vent system is to engage the door cleat profile (9) to the center guide profile of the door (20) vent by sliding movement. Position of the door cleat profile in the center guide profile (20) is determined by means of the position determining stand of the cleat profile (9) without requiring any measurement process. The center guide profile (20) is fixed to the door cleat profile from the fixing hole (9.3). Same processes are repeated for the other end of the center guide profile (20). The center guide profile is brought to the right position in the frame-shaped door vent profile (19) together with the door cleat profiles (9) which are fixed on thereof (Figure 13) and the fixing stands (9.1) of the door cleat profile are enabled to be fitted to the door profile by being stretched (Figure 14). Then, the door cleat profile (9) is fixed to the door vent profile (19) by being screwed using the fixing screw groove (9.4) of the door cleat profile (Figure 14).

## Claims

1. Door, window or curtain wall assembly, comprising frame profiles (1) having profile tabs (4.1) and transom and mullion profiles (4) having installation screw holes and profile tabs (4.1); the system further comprising an installation screw (7) and a cleat profile (2,3) which comprises special stands (2.1, 3.1), a cavity (2.2,3.2) for receiving the installation screw (7) and seperate portion for imposing a sliding movement on the cleat profile (2, 3); wherein horizontal, vertical or angular transom and mullion profiles (4) are rigidly joined mutually and to the frame profiles (1), thereby forming a frame, e.g. a fenestration frame, wherein the cleat profile (2, 3) is slidably arranged inside of a transom or mullion profile (1, 4) and engaged to profile tabs (4.1) of the counterpart profile (1,4) by means of its special stands (2.1, 3.1) **characterized in that** a rigid, reversible joint between the frame profiles (1,4), suitable for withstanding external loads, such as wind load or gravity, is obtained by fixing screw (7) which is inserted in the insltallation screw hole and in the cavity (2.2, 3.2) of the cleat profile (2,3), thereby immobilizing and locking the cleat profile (2,3) inside the surrounding transom or mullion profile (4).

2. Method of assembling a door, window or curtain wall assembly according to claim 1, the method comprising the step of sliding the cleat profile (2,3) to the counterpart profile (1,4) by means of a rack and pinion gear (2.3, 3.3) action or conical slot-pin action (22) or eccentric slot-pin action (21) on said separate portion until the special stands (2.1, 3.1) of the cleat profile (2, 3) engage the profile tabs (4.1) of the counterpart profile (1, 4) and until the installation screw (7) can be inserted in the installation screw hole and in the cavity (2.2, 3.2) of the cleat profile (2,3).

3. Method of assembling a door, window or curtain wall assembly according to claim 2, **characterized in that** the gear of an installation tool (6) is placed in a further installation tool hole in the transom/mulion profile (1, 4) in order to actuate the separate section of the cleat profile.

4. Method of assembling a door, window or curtain wall assembly according to any of claims 2 or 3, **characterized in that** anytime during production, installation or use of the system, transom or mullion profiles (1, 4) can be non-destructively disassembled, repositioned and fixed again.

## Patentansprüche

1. Tür, Fenster oder Vorhangwand-Verbindung, umfassend Rahmenprofile (1), die Profilaufhänger (4.1) sowie Riegel- und Pfostenprofile (4) aufweisen, welche Schraubenlöcher zur Installation und Profilaufhänger (4.1) haben; das System weist ferner eine Befestigungsschraube (7) und ein Querleisten-Profil (2,3) auf, welche spezielle Ständer (2.1, 3.1), eine Aussparung (2.2, 3.2) zur Aufnahme der Befestigungsschraube (7) und einen separaten Teil umfasst, um eine Gleitbewegung auf dem Querleisten-Profil (2,3) aufzuzwingen; wobei die horizontalen, vertikalen oder winkeligen Riegel- und Pfostenprofile (4) gegenseitig und an die Rahmenprofile starr verbunden sind, wodurch sie einen Rahmen, z.B. einen Fenestration-Rahmen bilden, wobei die Querleiste (2,3) innerhalb eines Riegel- oder Pfostenprofils (1, 4) verschiebbar angeordnet ist und an den Profilaufhänger (4.1) des gegenüberliegenden Profils (1, 4) durch ihre spezziellen Ständer (2.1, 3.1) einrastet, **dadurch gekennzeichnet, dass** eine starre, umkehrbare Verbindung zwischen den Rahmenprofilen (1, 4), die geeignet ist den äusseren Belastungen wie Windbelastung oder Erdanziehungskraft standzuhalten, durch Befestigungsschraube (7) erreicht ist, welche in das Loch für die Befestigungsschraube und in die Aussparung (2.2, 3.2) des Querleisten-Profils (2, 3) eingesetzt ist und dabei das Querleisten-Profil (2, 3) innerhalb des umliegenden Riegel-und Pfostenprofils (4) bewegungsunfähig macht und verriegelt.

2. Verfahren für Montage einer Tür, Fenster oder Vorhangwand-Verbindung gemäß Anspruch 1, umfassend den Schritt der Verschiebung des Querleisten-Profils (2,3) zum Gegenprofil (1, 4) mit Hilfe einer Zahnstangengetriebe-Wirkung (2.3, 3.3) oder einer konischen Schlitz-Zapfen-Wirkung (22) oder exzentrischen Schlitz-Zapfen Wirkung (21) auf dem genannten separaten Teil, bis die speziellen Ständer (2.1, 3.1) des Querleisten-Profils (2, 3) an die Profilaufhänger (4,1) des Gegenprofils (1, 4) einrasten und bis die Befestigungsschraube (7) in das Schraubenloch und in die Aussparung (2.2, 3.2) des Querleisten-profils (2, 3) eingesetzt ist.

3. Verfahren für Montage einer Tür, Fenster oder Vorhangwand-Verbindung gemäß Anspruch 2, **dadurch gekennzeichnet, dass** ein Zahnrad des Installationswerkzeugs (6) in ein weiteres Installationswerkzeug-Loch im Riegel-/Pfostenprofil (1, 4) angebracht wird, um den separaten Teil des Querleisten-Profils zu betätigen.

4. Verfahren für Montage einer Tür, Fenster oder Vorhangwand-Verbindung gemäß Ansprüche 2 oder 3, **dadurch gekennzeichnet, dass** jederzeit während der Produktion, Installation oder Verwendung des Systems die Riegel oder Pfostenprofile (1, 4) zerstörungsfrei auseinandergebaut, umgestellt und wieder befestigt werden können.

## Revendications

1. L'assemblage de porte, fenêtre, ou mur rideau, comportant des profilés (1) ayant des onglets de profilé (4.1) et des profilés de traverse et meneau (4) possédant des trous de vis d'installation et des onglets de profilé (4.1); le système comportant aussi d'un vis d'installation (7) et un profilé de tasseau (2.3) comprenant des brins spéciaux (2.1, 3.1), une cavité (2.2, 3.2) une cavité (2.2, 3.2) pour recevoir le vis d'installation (7) et une portion séparée pour imposer un mouvement de coulissement sur le profilé de tasseau (2.3); dans lequel les profilés de traverse et meneau horizontales, verticaux, ou angulaires (4) sont rigidement reliés mutuellement et aux profilés de cadre (1), ainsi formant un cadre, par exemple un cadre de fenêtrage, dans lequel le profilé de tasseau (2.3) est arrangé dans une manière coulissante à l'intérieur du profilé de traverse et meneau (1.4) et engagé par les onglets de profilé (4.1) du profilé de contrepartie (1.4) au moyen des brins spéciaux (2.1, 3.1), **caractérisé en ce qu'**on obtient un joint rigide et réversible entre les profilés de carcasse (1.4) approprié pour résister aux charges extérieures telles que la charge de vent ou la gravité en resserrant le vis (7) inséré à l'intérieur du trou de vis d'installation et de la cavité (2.2, 3.2) du profilé de tasseau (2.3), ainsi immobilisant et verrouillant le profilé de tasseau (2.3) à l'intérieure du profilé de traverse et meneau (4) entourant.

2. Une méthode de montage de l'assemblage de porte, fenêtre, ou mur rideau selon la revendication 1, la méthode comportant l'étape de coulissement du profilé de tasseau (2.3) au profilé de contrepartie (1.4) au moyen de l'action d'une denture de support et pignon (2.3, 3.3) ou l'action de rainure conique et épingle (22) ou l'action de rainure excentrique et épingle (21) sur ladite portion séparée jusqu'aux brins spéciaux (2.1, 3.1) du profilé de tasseau (2.3) engage les onglets de profilé (4.1) du profilé de contrepartie (1.4) et jusqu'à ce qu'on insère le vis d'installation (7) dans le trou de vis d'installation et dans la cavité (2.2, 3.2) du profilé de tasseau (2.3).

3. Une méthode de montage de l'assemblage de porte, fenêtre, ou mur rideau selon la revendication 2, **caractérisée en ce que** la denture d'un outil d'installation (6) est placé dans un autre trou d'outil d'installation dans le profilé de traverse et meneau (1, 4) afin d'actionner la section séparée du profilé de tasseau.

4. Une méthode de montage de l'assemblage de porte, fenêtre, ou mur rideau selon l'une quelconque des revendications 2 ou 3, **caractérisée en ce que** les profilés de traverse ou meneau (1, 4) peuvent être démontés, repositionnés, et resserrés de nouveau dans une manière non-destructive, à tout moment pendant la production, l'installation, ou l'utilisation du système.
